# EUROPEAN PATENT SPECIFICATION

(11) **EP 3 647 721 B1**
(45) Date of publication and mention of the grant of the patent: **24.08.2022**
(21) Application number: 17916300.1
(22) Date of filing: 11.07.2017
(51) Int. Cl.: G01C 15/00, G01S 17/08, G01S 17/86, G01S 7/481

(54) **MEASURING TOOL**
MESSINSTRUMENT
OUTIL DE MESURE

(30) Priority: 29.06.2017 CN 201710514798
(43) Date of publication of application: 06.05.2020
(73) Proprietor: Changzhou Huada Kejie Opto-Electro Instrument Co., Ltd., Changzhou, Jiangsu 213023 (CN)
(72) Inventor: ZHANG, Ou, Changzhou Jiangsu 213023 (CN); WU, Jun, Changzhou Jiangsu 213023 (CN)
(74) Representative: Lambsdorff & Lange Patentanwälte Partnerschaft mbB
(86) International application number: PCT/CN2017/092481
(87) International publication number: WO 2019/000487

(56) References cited:
- CN-A- 1 610 818
- CN-U- 202 928 579
- CN-U- 205 192 495
- CN-U- 206 161 008
- CN-U- 206 989 955
- DE-A1-102015 205 600
- US-A1- 2004 111 898
- US-A1- 2005 280 802
- US-A1- 2006 021 237
- US-A1- 2016 313 121

## Description

### TECHNICAL FIELD

The present invention refers to the field of measuring tools, in particular, to a compact and portable measuring tool.

### BACKGROUND

Infrared levels, laser levels, laser distance meters, etc., are widely used in the fields of building construction, engineering monitoring, engineering decoration, furniture fittings, or the like. A laser level also refers to as a laser line maker, or a laser line level, which uses a semiconductor laser to form one or more highlighted laser lines by beam expansion, and projects the laser lines to an object to produce projection lines, then a user can use the projection lines to cut, or align the object, or do something else. A laser distance meter is an instrument for measuring the distance to an object by modulating some parameter of the laser. The laser distance meter could be divided into two categories: phase distance meters and pulse distance meters. A pulse distance meter, in operation, sends a pulse laser beam or a sequence of short pulse laser beams towards the object, receives the laser beam(s) reflected off the target by a photoelectric element, and measures the time taken by the laser beam from sending to reception, then calculates the distance from the observer to the object; while a phase distance meter measures a distance by detecting the phase difference between emitted lights and reflected lights propagating in space. The laser distance meter is light, compact, and simple to operate, with high speed and accuracy, whose error is only one fifth to one-several-hundredths of that of other optical distance meters. Currently, in the existing scene of building construction, a laser level and a distance meter are usually used in combination, and operated individually to project lines and measure distance, however, owing to the certain volume of the two kinds of instruments, inconvenience will be caused during both carriage and placement.

In view of this, aiming to enable the two instruments to be more convenient in use, the present invention provides a compact and portable measuring tool, including a small-scale laser level and a small-scale distance meter, which can not only be employed individually for implementing their respective function, but also combined and matched to project lines and measure distance at the same time, thereby achieving unexpected beneficial effects. US2016313121 A1 discloses an adjustable laser leveling device with distance measuring lasers and self-leveling lasers.

### SUMMARY

The objective of the present invention is to provide a measuring tool to overcome the above-mentioned technical problems.

The present invention discloses a measuring tool comprising a laser level and a distance meter; the measuring tool comprises a limit means located on one of the laser level and the distance meter, and employed for the superposition of the laser level and the distance meter.

When located on the laser level, the limit means comprises protruding strips on the two lateral edges of the laser level, wherein the distance between the protruding strips is equivalent to the width in the radial direction of the distance meter, such that the distance meter is caught between the protruding strips.

When located on the distance meter, the limit means comprises protruding strips on the two lateral edges of the distance meter, wherein the distance between the protruding strips is equivalent to the width in the radial direction of the laser level, such that the laser level is caught between the protruding strips.

Preferably, when the limit means locates on the laser level, the protruding strips are provided along the edge contours of two lateral surfaces of the laser level, and rounded at corners.

Preferably, the protruding strips are provided along the axial edges of two lateral surfaces of the laser level.

Preferably, the distance meter is provided with guiding rails outwards at the axial edges thereof, the protruding strips is provided with rail slots inwards for fitting with the guiding rails, and the distance meter slides in between the protruding strips along the rail slots.

Preferably, when the limit means locates on the distance meter, the protruding strips are provided along the edge contours of two lateral surfaces of the distance meter, and rounded at corners.

Preferably, the protruding strips are provided along the axial edges of two lateral surfaces of the distance meter.

Preferably, the laser level is provided with guiding rails outwards at the axial edges thereof, the protruding strips are provided with rail slots inwards for fitting with the guiding rails, and the laser level slides in between the protruding strips along the rail slots.

Preferably, when the limit means locates on the laser level, the limit means comprises protruding strips with notches on the two lateral edges of the laser level, and the notches have a width equivalent to the width in the radial direction of the distance meter, and accommodate the distance meter therein, such that the distance meter and the laser level are placed perpendicularly.

Preferably, when the limit means locates on the distance meter, the limit means comprises protruding strips with notches on the two lateral edges of the distance meter, and the notches have a width equivalent to the width in the radial direction of the laser level, and accommodate the laser level therein, such that the distance meter and the laser level are placed perpendicularly.

Preferably, when the limit means locates on the laser level, the direction of the notches is set parallel to the radial direction of the laser level.

Preferably, the laser level comprises a first laser module and a leveling module;
the first laser module locates at the end with the laser level's light-emitting surface, and is provided to face the laser level's light-emitting surface;
the leveling module locates at the opposite end of the laser level's light-emitting surface;
the distance meter comprises a second laser module, a distance measuring module, and a data display module;
the second laser module locates at the end with the distance meter's light-emitting surface, and is provided to face the distance meter's light-emitting surface;
the distance measuring module locates behind the second laser module;
the data display module locates on the outer housing of the distance measurement.

After employing the above-mentioned technical solution, the beneficial effects compared with the prior art are as follows:
1. the laser level and the distance meter are far less in size than that of the ordinary products in the market, and so compact that it can be conveniently carried in pocket.
2. the distance meter and the laser level can be used individually to implement their respective basic functions.
3. the distance meter and the laser level can be used in combination, that is, the line projection and the distance measurement can be implemented at the same time, so as to achieve unexpected convenient effects.

### BRIEF DESCRIPTION OF THE DRAWINGS

Figure 1 is a schematic view of the structure of a preferred embodiment of the present invention.
Figure 2 is an exploded view of the structure of a preferred embodiment of the present invention.
Figure 3 is a schematic view of the inside structure of the laser level according to one preferred embodiment of the present invention.
Figure 4 is a schematic view of the inside structure of the laser level according to one preferred embodiment of the present invention.
Figure 5 is a schematic views of the inside structure of the laser level according to one preferred embodiment of the present invention.

### Reference numerals:

10-measuring tool;
11-laser level;
111-first laser module; 112-leveling module; 113-first button module; 114-fisrt power module;
12-distance meter;
121-second laser module; 122-distance measuring module; 123-data display module; 124-second power module;
13-protruding strip;
14-notch.

### DETAILED DESCRIPTION

Hereinafter the advantage of the present invention will be further described in conjunction with the accompanying drawings and specific embodiments.

The measuring tool 10 provided by the present invention includes a laser level 11 and a distance meter 12.

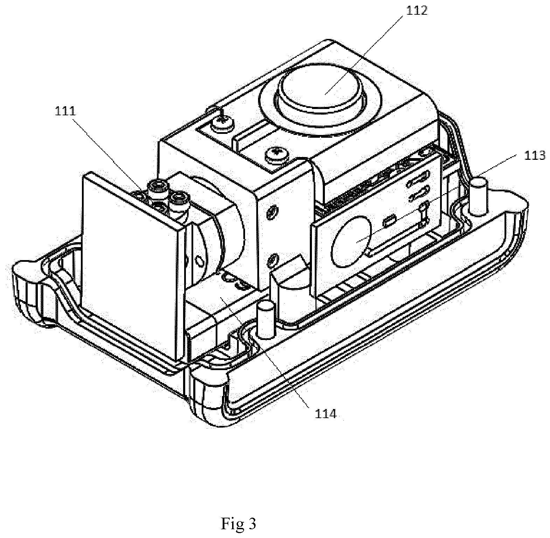

Referring to Fig.3, it is a schematic view of the inside structure of the laser level according to one preferred embodiment of the present invention. The laser level 11 comprises a first upper housing, a first lower housing, a first laser module 111, a leveling module 112, a first button module 113, and a first power module 114, wherein the first laser module 111 locates at the end of the first lower housing with the laser level's light-emitting surface, and is provided to face the laser level's light-emitting surface; the leveling module 112 locates at the opposite end of the first lower housing with the laser levels' light-emitting surface, and is provided to face the upper housing; the first button module 113 locates at a lateral surface of the laser level 11, of course, it could be provided at any surface of the outer housing of laser level; and the first power module 114 locates among the first laser module 111, the leveling module 112, and the first lower housing.

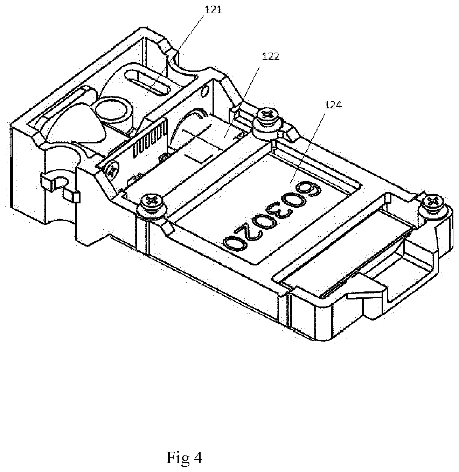

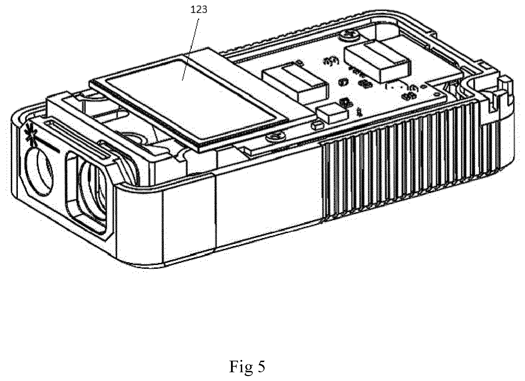

Referring to Figs. 4-5, they are schematic views of the inside structure of the distance meter according to one preferred embodiment of the present invention. The distance meter comprises a second upper housing, a second lower housing, a bracket, a second laser module 121, a distance measuring module 122, a data display module 123, a second button module, and a second power module 124, wherein the second laser module 121 locates at the end of the bracket with the distance meter's light-emitting surface, and is provided to face the distance meter's light-emitting surface; the distance measuring module 122 locates behind the second laser module 121 on the bracket, and between the second laser module 121 and the second power module 124; the data display module 123 locates on the second upper housing; the second button module could be provided at any surface of the outer housing of the distance meter, and the second power module 124 locates behind the distance measuring module 122 on the bracket.

First, based on the aforementioned construction, the laser level 11 and the distance meter 12 are far less in size, volume, weight and the like, than that of the ordinary products in the market, and can be carried in pocket, very suitable for use in the scene of civilian building construction. Moreover, both the laser level 11 and the distance meter 12 provided by the present invention are of a cube-shaped (cuboid-shaped) structure, which is convenient not only for package, but also for carriage.

Second, the small-scaled distance meter 12 and the small-scaled laser level 11 can be used individually to implement their respective basic functions. The distance meter 12 is of small volume, light, highly integrated, of high speed, easy to operate, and safe to human eyes, therefore it is capable of being widely employed in daily production and life, such as for wild hunting, golf hole ranging, or indoor scale measuring.

More importantly, the small-scaled distance meter 12 and the small-scaled laser level 11 can be used in combination, that is, the line projection and the distance measurement can be implemented at the same time, so as to achieve unexpected convenient effects. Similarly, both the laser level 11 and the distance meter 12 provided by the present invention are of a cube-shaped (cuboid-shaped) structure, which is more convenient for mounting, and for fitting in use. Furthermore, the laser level 11 and the distance meter 12 match with each other in size, for instance, the width of the upper and lower surfaces of the laser level 11 is equivalent to that of the distance meter 12, and the laser level11 and the distance meter 12 are superposed; the laser level 11 is provided with a limit means, and when the laser level 11 and the distance meter 12 are superposed, the limit means of the laser level 11 secures the distance meter 12 at one side of the laser level 11; or the distance meter 12 is provided with a limit means, and when the laser level 11 and the distance meter 12 are superposed, the limit means of the distance meter 12 secures the laser level 11 at one side of the distance meter 12.

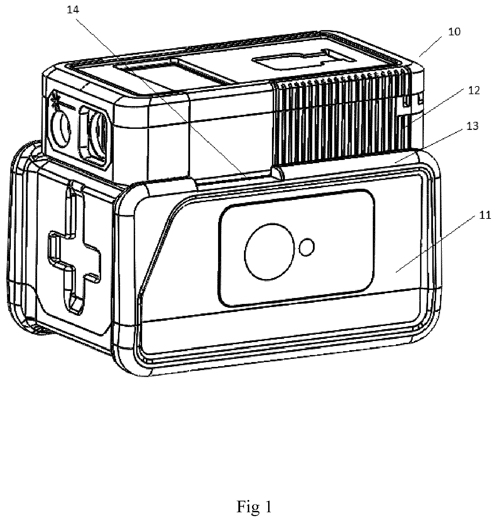

With reference to Fig.1, in the first combination way of the laser level 11 and the distance meter 12, one instrument can be placed on top of the other, and there is provided with a certain limit means on the outer housing ensuring the parallel placement of the two instruments, such that the emitting directions of lasers thereof are identical. Hence, in operation, while the laser level 11 projects lines upon a wall surface, the distance meter 12 can measure the distance between the work point and the wall surface.

In one preferred embodiment, the limit means includes protruding strips 13 on the two lateral edges of the laser level 11, which are similar to two protruding frames. The distance between the protruding strips 13 is equivalent to the width in the radial direction of the distance meter 12, such that the distance meter 12 can be caught between the protruding strips 13. Hence, the laser level 11 can be put quickly in an accurate position, and when in position, the laser level 11 locates exactly in the protruding strips 13, without easy displacement.

In this embodiment, both the laser level 11 and the distance meter 12 provided by the present invention are of a cube-shaped (cuboid-shaped) structure, and they are placed horizontally, superposed, and set in parallel, wherein the distance meter 12 is placed on the top of the laser level 11. The distance meter 12 and the laser level 11 match with each other in size, the width of the upper and lower surfaces of the laser level 11 is slightly larger than that of the distance meter 12, and the laser level 11 are provided with protruding strips 13 on the two lateral edges thereof, wherein the distance between the protruding strips 13 is equivalent to the width in the radial direction of the distance meter 12, such that the distance meter 12 can be caught between the protruding strips 13, without easy displacement in the radial direction.

In one preferred embodiment, the laser level 11 is provided with two protruding strips 13 along the whole edge contours of two lateral surfaces, and the protruding strips 13 are rounded at the eight corners of the cuboid.

In another embodiment, the protruding strips 13 could be only provided along the axial edge contours of two lateral surfaces of the laser level 11, with the length thereof just equivalent to that of the axial edge contour, and corners rounded. Of course, depart from the two aforementioned ways, the protruding strips 13 can also be provided at intervals, for example, with short sections distributed uniformly along the axial edge contours, or only provided with one short section along the axial edges of the two lateral surfaces thereof. On the basis of the aforementioned provision of the protruding strips 13 along the axial edges of the two lateral side surfaces of the laser level 11, and the distance meter 12 caught in the protruding strips 13 to limit the radial displacement of the distance meter 12, protruding strips 13 can also be provided at the front and rear edges of the laser level 11, and the provision of the protruding strips 13 can likewise refer to the aforementioned forms, so as to limit the axial movement of the distance meter 12.

In one preferred embodiment, based on the aforementioned protruding strips 13, the laser level 11 can also be provided with rail slots in the protruding strips 13 in opposite directions at the axial edges of the two lateral surfaces, and correspondingly, the distance meter 12 is provided with guiding rails outwards at the axial edges thereof fitting with the rail slots, such that the distance meter 12 is able to slide between the protruding strips 13 along the rail slots.

It should be understood that the relative position in vertical direction of the distance meter 12 and the laser level 11 are not limited to the aforementioned position. Rather, it can also be that the width of the upper and lower surfaces of the laser level 11 is slightly smaller than that of the distance meter 12, and when in this situation, the laser level 11 is placed on top of the distance meter 12, and caught into a limit means of the latter, wherein the shape, position and structure of the limit means can likewise refer to the aforementioned forms, and no more details thereof will be given herein.

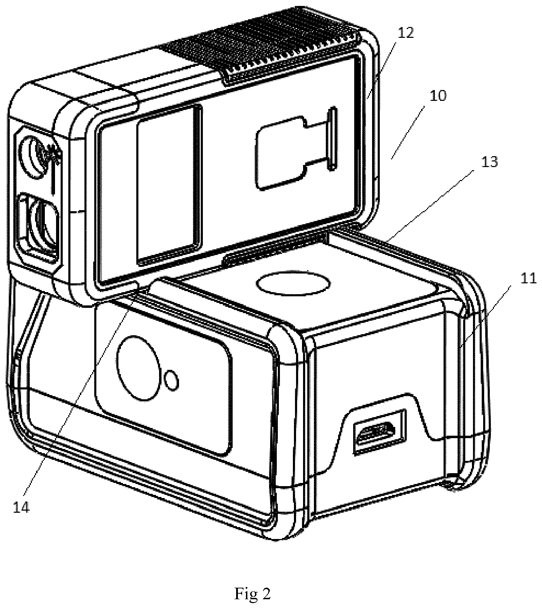

With reference to Fig.2, in the second combination way of the laser level 11 and the distance meter 12, one instrument can be placed on top of the other, and there is provided with a certain limit means on the outer housing ensuring the perpendicular placement of the two instruments, such that the emitting directions of lasers thereof are perpendicular to each other. Hence, in operation, while line projection upon a wall surface is implemented, the distance between the work point and the left and/or right wall surface(s) can be measured. For instance, when it is necessary to refer to the projections of dots or lines at intervals on a target wall, a user can quickly finish the work in this combination way.

In one preferred embodiment, the limit means includes protruding strips 13 with notches 14 on the two lateral edges of the laser level 11. The width of the notches 14 is equivalent to the length in the axial direction of the distance meter 12, and the distance meter 12 is accommodated therein, such that the distance meter 12 and the laser level 11 can be placed perpendicularly. Hence, the laser level 11 can likewise be put quickly in an accurate position, and when in position, the laser level 11 locates exactly in the protruding strips 13, without easy displacement.

In this embodiment, both the laser level 11 and the distance meter 12 are of a cube-shaped (cuboid-shaped) structure, the distance meter 12 are placed vertically, and the laser level 11 are placed horizontally, wherein they are superposed perpendicularly, and the distance meter 12 is placed on the top of the laser level 11. The laser level 11 and the distance meter 12 match with each other in size, and the width of the distance meter 12 is smaller than the axial length of the laser level 11; furthermore, the laser level 11 are provided with protruding strips 13 with notches 14 on the two lateral edges thereof, the distance between the notches 14 of the protruding strips 13 is equivalent to the height of the distance meter 12, such that the distance meter 12 can be caught there between, without easy displacement.

Similarly, the protruding strips 13 could be provided with reference to the mentioned above, that is, along the whole edge contours of two lateral surfaces of the laser level 11, or only along the axial edge contours of two lateral surfaces of the laser level 11, or at intervals along the axial edge contours thereof, for example, with short sections distributed uniformly, or with only a short section along the axial edges of the two lateral surfaces thereof, as long as the width of the notches 14 of the protruding strips 13 is equal to the height of the distance meter 12.

In one preferred embodiment, the notches 14 are provided parallel to the radial direction of the laser level 11. In this situation, the distance meter 12 is placed vertically, the laser level 11 is placed horizontally, and they are superposed perpendicularly, such that the emitting directions of their lasers are perpendicular to each other. In another preferred embodiment, the notches 14 are provided at an angle to the radial direction of the laser level 11. In this situation, the distance meter 12 is placed vertically, the laser level 11 is placed horizontally, and they are superposed at an angle, such that the emitting directions of their lasers are at an angle likewise.

Moreover, it is also possible that the laser level 11 and the distance meter 12 are placed horizontally, superposed, and crossing with each other, such that the emitting directions of their lasers are at an angle. The laser level 11 is provided with protruding strips 13 with notches 14 on the two lateral edges, and the notches 14 of the protruding strips 13 are provided to have a width equal to that of the distance meter 12, and to have an angle to the radial direction of the laser level 11, so as to accommodating the distance meter 12 in the notches 14.

In one preferred embodiment, the measuring tool 10 further includes a base, with which the laser level 11 can be connected adjustably by screw threads. The laser level 11 is provided with a threaded hole connected with the screw threads of the base, and when the operation plane does not assume a horizontal state, the laser level 11 can be used for fitting with the base to adjust the operation plane to be horizontal.

In one preferred embodiment, the laser level 11 and the distance meter 12 employ rechargeable batteries, and are provided with charging interfaces. The charging interfaces could be USB interfaces, and provided in the opposite side to the laser-emitting surface of the laser level 11 and the distance meter 12.

## Claims

1. A measuring tool (10) comprising a laser level (11) and a distance meter (12),
**characterized in that** wherein
the measuring tool comprises a limit means located on one of the laser level and the distance meter, and employed for the superposition of the laser level and the distance meter;
when located on the laser level, the limit means comprises protruding strips (13) on the two lateral edges of the laser level, wherein the distance between the protruding strips is equivalent to the width in the radial direction of the distance meter, such that the distance meter is caught between the protruding strips;
when located on the distance meter, the limit means comprises protruding strips (13) on the two lateral edges of the distance meter, wherein the distance between the protruding strips is equivalent to the width in the radial direction of the laser level, such that the laser level is caught between the protruding strips.

2. The measuring tool according to Claim 1, wherein
when the limit means locates on the laser level, the protruding strips are provided along the edge contours of two lateral surfaces of the laser level, and rounded at corners.

3. The measuring tool according to Claim 2, wherein
the protruding strips are provided along the axial edges of two lateral surfaces of the laser level.

4. The measuring tool according to Claim 3, wherein
the distance meter is provided with guiding rails outwards at the axial edges thereof, the protruding strips is provided with rail slots inwards for fitting with the guiding rails, and the distance meter slides in between the protruding strips along the rail slots.

5. The measuring tool according to Claim 1, wherein
when the limit means locates on the distance meter, the protruding strips are provided along the edge contours of two lateral surfaces of the distance meter, and rounded at corners.

6. The measuring tool according to Claim 5, wherein
the protruding strips are provided along the axial edges of two lateral surfaces of the distance meter.

7. The measuring tool according to Claim 6, wherein
the laser level is provided with guiding rails outwards at the axial edges thereof, the protruding strips are provided with rail slots inwards for fitting with the guiding rails, and the laser level slides in between the protruding strips along the rail slots.

8. The measuring tool according to Claim 1, wherein
when the limit means locates on the laser level, the limit means comprises protruding strips with notches (14) on the two lateral edges of the laser level, and the notches have a width equivalent to the width in the radial direction of the distance meter, and accommodate the distance meter therein, such that the distance meter and the laser level are placed perpendicularly;
when the limit means locates on the distance meter, the limit means comprises protruding strips with notches (14) on the two lateral edges of the distance meter, and the notches have a width equivalent to the width in the radial direction of the laser level, and accommodate the laser level therein, such that the distance meter and the laser level are placed perpendicularly.

9. The measuring tool according to Claim 8, wherein
when the limit means locates on the laser level, the direction of the notches is set parallel to the radial direction of the laser level.

10. The measuring tool according to Claim 1, wherein
the laser level comprises a first laser module (111) and a leveling module (112);
the first laser module locates at the end with the laser level's light-emitting surface, and is provided to face the laser level's light-emitting surface;
the leveling module locates at the opposite end of the laser level's light-emitting surface;
the distance meter comprises a second laser module, a distance measuring module, and a data display module (123);
the second laser module locates at the end with the distance meter's light-emitting surface, and is provided to face distance meter's light-emitting surface;
the distance measuring module locates behind the second laser module;
the data display module locates on the outer housing of the distance measurement.

## Patentansprüche

1. Messgerät (10), das eine Lasernivelliereinrichtung (11) und einen Distanzmesser (12) aufweist
**dadurch gekennzeichnet, dass** das Messgerät eine Begrenzungseinrichtung aufweist, die sich entweder auf der Lasernivelliereinrichtung oder auf dem Distanzmesser befindet und für die Überlagerung der Lasernivelliereinrichtung und des Distanzmessers verwendet wird;
wenn sie an der Lasernivelliereinrichtung angeordnet ist, die Begrenzungseinrichtung vorstehende Streifen (13) an den beiden lateralen Kanten der Lasernivelliereinrichtung aufweist, wobei der Abstand zwischen den vorstehenden Streifen der Breite in der radialen Richtung des Distanzmessers entspricht, so dass der Distanzmesser zwischen den vorstehenden Streifen gefangen ist;
wenn sie sich auf dem Distanzmesser befindet, die Begrenzungseinrichtung vorstehende Streifen (13) an den beiden lateralen Rändern des Distanzmessers aufweist, wobei der Abstand zwischen den vorspringenden Streifen der Breite in radialer Richtung der Lasernivelliereinrichtung entspricht, so dass die Lasernivelliereinrichtung zwischen den vorspringenden Streifen gefangen ist.

2. Messgerät nach Anspruch 1, wobei
wenn die Begrenzungseinrichtung an der Lasernivelliereinrichtung anliegt, die vorspringenden Streifen entlang der Kantenkonturen zweier lateraler Flächen der Lasernivelliereinrichtung vorgesehen und an Ecken abgerundet sind.

3. Messgerät nach Anspruch 2, wobei
die vorspringenden Streifen entlang der axialen Kanten zweier lateraler Flächen der Lasernivelliereinrichtung vorgesehen sind.

4. Messgerät nach Anspruch 3, wobei
der Distanzmesser an seinen axialen Rändern mit Führungsschienen nach außen versehen ist, die vorstehenden Streifen mit Schienenschlitzen nach innen zum Einpassen in die Führungsschienen versehen sind, und der Distanzmesser zwischen den vorstehenden Streifen entlang der Schienenschlitze gleitet.

5. Messgerät nach Anspruch 1, wobei
wenn die Begrenzungseinrichtung an dem Distanzmesser anliegt, die vorstehenden Streifen entlang der Kantenkonturen zweier lateraler Flächen des Distanzmessers vorgesehen und an den Ecken abgerundet sind.

6. Messgerät nach Anspruch 5, wobei
die vorspringenden Streifen entlang der axialen Kanten zweier lateraler Flächen des Distanzmessers vorgesehen sind.

7. Messgerät nach Anspruch 6, wobei
die Lasernivelliereinrichtung an ihren axialen Rändern mit Führungsschienen nach außen versehen ist, die vorstehenden Streifen mit Schienenschlitzen nach innen zur Anpassung an die Führungsschienen versehen sind und die Lasernivelliereinrichtung zwischen den vorstehenden Streifen entlang der Schienenschlitze gleitet.

8. Messgerät nach Anspruch 1, wobei
wenn die Begrenzungseinrichtung auf der Lasernivelliereinrichtung angeordnet ist, die Begrenzungseinrichtung vorstehende Streifen mit Aussparungen (14) an den beiden seitlichen Rändern der Lasernivelliereinrichtung aufweist, und die Aussparungen eine Breite aufweisen, die der Breite in der radialen Richtung des Distanzmessers entspricht, und den Distanzmesser darin aufnehmen, so dass der Distanzmesser und die Lasernivelliereinrichtung senkrecht angeordnet sind;
wenn sich die Begrenzungseinrichtung auf dem Distanzmesser befindet, weist die Begrenzungseinrichtung vorstehende Streifen mit Kerben (14) an den beiden seitlichen Rändern des Distanzmessers auf, und die Kerben haben eine Breite, die der Breite in der radialen Richtung der Lasernivelliereinrichtung entspricht, und nehmen die Lasernivelliereinrichtung darin auf, so dass der Distanzmesser und die Lasernivelliereinrichtung rechtwinklig angeordnet sind.

9. Messgerät nach Anspruch 8, wobei
wenn die Begrenzungseinrichtung an der Lasernivelliereinrichtung anliegt, die Richtung der Kerben parallel zur radialen Richtung der Lasernivelliereinrichtung eingestellt ist.

10. Messgerät nach Anspruch 1, wobei
die Lasernivelliereinrichtung ein erstes Lasermodul (111) und ein Nivelliermodul (112) aufweist;
das erste Lasermodul an dem Ende mit der lichtemittierenden Oberfläche der Lasernivelliereinrichtung angeordnet ist und so vorgesehen ist, dass es der lichtemittierenden Oberfläche der Lasernivelliereinrichtung gegenüberliegt;
das Nivelliermodul am gegenüberliegenden Ende der Lichtaustrittsfläche der Lasernivelliereinrichtung angeordnet ist;
der Distanzmesser ein zweites Lasermodul, ein Distanzmessmodul und ein Datenanzeigemodul (123) aufweist;
das zweite Lasermodul befindet sich an dem Ende mit der lichtemittierenden Oberfläche des Distanzmessers und ist der lichtemittierenden Oberfläche des Distanzmessers zugewandt;
das Entfernungsmessmodul befindet sich hinter dem zweiten Lasermodul;
das Datenanzeigemodul befindet sich auf dem Außengehäuse des Entfernungsmessers.

## Revendications

1. Outil de mesure (10) comprenant un niveau laser (11) et un mesureur de distance (12), **caractérisé en ce que**
l'outil de mesure comprend un moyen de limitation situé soit sur le niveau de laser, soit sur le mesureur de distance, et employé pour la superposition du niveau laser et du mesureur de distance ;
lorsqu'il est situé sur le niveau laser, le moyen de limitation comprend des bandes proéminentes (13) sur les deux bords latéraux du niveau laser, la distance entre les bandes proéminentes étant équivalente à la largeur dans le sens radial du mesureur de distance, de sorte que le mesureur de distance est pris entre les bandes proéminentes ;
lorsqu'il est situé sur le mesureur de distance, le moyen de limitation comprend des bandes proéminentes (13) sur les deux bords latéraux du mesureur de distance, la distance entre les bandes proéminentes étant équivalente à la largeur dans le sens radial du niveau laser, de sorte que le niveau laser est pris entre les bandes proéminentes.

2. Outil de mesure selon la revendication 1, dans lequel,
lorsque le moyen de limitation se trouve sur le niveau laser, les bandes proéminentes sont prévues le long des contours périphériques de deux surfaces latérales du niveau laser, et arrondies dans les coins.

3. Outil de mesure selon la revendication 2, dans lequel
les bandes proéminentes sont prévues le long des bords axiaux de deux surfaces latérales du niveau laser.

4. Outil de mesure selon la revendication 3, dans lequel
le mesureur de distance est pourvu de rails de guidage vers l'extérieur au niveau de ses bords axiaux, les bandes proéminentes sont pourvues de fentes de rails vers l'intérieur destinées à s'ajuster avec les rails de guidage, et le mesureur de distance coulissent entre les bandes proéminentes le long des fentes de rails.

5. Outil de mesure selon la revendication 1, dans lequel,
lorsque le moyen de limitation se trouve sur le mesureur de distance, les bandes proéminentes sont prévues le long des contours périphériques de deux surfaces latérales du mesureur de distance, et arrondies dans les coins.

6. Outil de mesure selon la revendication 5, dans lequel
les bandes proéminentes sont prévues le long des bords axiaux de deux surfaces latérales du mesureur de distance.

7. Outil de mesure selon la revendication 6, dans lequel
le niveau laser est pourvu de rails de guidage vers l'extérieur au niveau de ses bords axiaux, les bandes proéminentes sont pourvues de fentes de rails vers l'intérieur destinées à s'ajuster avec les rails de guidage, et le niveau laser coulisse entre les bandes proéminentes le long des fentes de rails.

8. Outil de mesure selon la revendication 1, dans lequel,
lorsque le moyen de limitation se trouve sur le niveau laser, le moyen de limitation comprend des bandes proéminentes dotées d'encoches (14) sur les deux bords latéraux du niveau laser, et les encoches ont une largeur équivalente à la largeur dans le sens radial du mesureur de distance, et abritent le mesureur de distance, de sorte que le mesureur de distance et le niveau laser sont placés perpendiculairement ;
lorsque le moyen de limitation se trouve sur le mesureur de distance, le moyen de limitation comprend des bandes proéminentes dotées d'encoches (14) sur les deux bords latéraux du mesureur de distance, et les encoches ont une largeur équivalente à la largeur dans le sens radial du niveau laser, et abritent le mesureur de distance, de sorte que le mesureur de distance et le niveau laser sont placés perpendiculairement.

9. Outil de mesure selon la revendication 8, dans lequel,
lorsque le moyen de limitation se trouve sur le niveau laser, la direction des encoches est définie de manière à être parallèle au sens radial du niveau laser.

10. Outil de mesure selon la revendication 1, dans lequel
le niveau laser comprend un premier module de laser (111) et un module de nivelage (112) ;
le premier module de laser se trouve à l'extrémité avec la surface électroluminescente du niveau laser et est prévu de manière à faire face à la surface électroluminescente du niveau laser ;
le module de nivelage se trouve à l'extrémité opposée de la surface électroluminescente du niveau laser ;
le mesureur de distance comprend un second module laser, un module de mesure de distance, et un module d'affichage de données (123) ;
le second module laser se trouve à l'extrémité avec la surface électroluminescente du mesureur de distance, et est prévu de manière à faire face à la surface électroluminescente du mesureur de distance ;
le module de mesure de distance se trouve derrière le second module laser ;
le module d'affichage de données se trouve sur le boîtier extérieur du mesureur de distance.
